# EUROPEAN PATENT APPLICATION

(11) **EP 2 511 114 A1**
(43) Date of publication of application: **17.10.2012**
(21) Application number: 10835703.9
(22) Date of filing: 08.12.2010
(51) Int. Cl.: B60H 1/32, B60H 1/00, B60H 1/34, F25B 5/02

(54) **AIR CONDITIONING DEVICE FOR VEHICLE**

(30) Priority: 10.12.2009 JP 2009280327
(71) Applicant: Sanden Corporation, Isesaki-shi Gunma 372-8502 (JP)
(72) Inventor: TOYAMA, Takashi, Isesaki-shi Gunma 372-8502 (JP); FUJII, Nobuhiko, Isesaki-shi Gunma 372-8502 (JP); NOMURA, Risa, Isesaki-shi Gunma 372-8502 (JP); SAKURAI, Hirotaka, Isesaki-shi Gunma 372-8502 (JP)
(74) Representative: Haley, Stephen
(86) International application number: PCT/JP2010/007152
(87) International publication number: WO 2011/070780

(57) **Abstract**

Provided is an air conditioning system for vehicles, this air conditioning system being configured in such a way that it is possible to perform air conditioning for separate purposes, such as for cooling a driver, this type of air conditioning being extremely efficient in terms of energy, and that even if part of the air conditioning system is installed in a vehicle cabin, it is possible to meet requirements for securing a space in the vehicle cabin. The aforementioned air conditioning system for vehicles comprises a refrigeration circuit provided with a compressor, a condenser, an expansion means, and an evaporator, and is characterized in that the compressor and the condenser are disposed in an in-vehicle area outside the vehicle cabin, and that the expansion means and the evaporator are locally disposed in one or more selected specific regions in the vehicle cabin, preferably in such a way as to be incorporated into units.

## Description

### Technical Field of the Invention

The present invention relates to an air conditioning system for vehicles, and specifically, to an air conditioning system for vehicles which is suitable for energy conservation in general automobiles, enhancement of efficiency of air-conditioning for occupants and securing the front space in the vehicle cabin.

### Background Art of the Invention

An air conditioning system for general automobiles except construction vehicles, etc. usually has a refrigeration circuit provided with a compressor for refrigerant, a condenser, an expansion means (an expansion valve) and an evaporator. Such a refrigeration circuit provided with these instruments is configured to be generally disposed at a position forward of an instrument panel (such a situation is also referred to as "in the instrument panel" herein) so as to send air from the refrigeration circuit into the vehicle cabin through air outlets of air-conditioning wind provided at various positions. Further, in some cases, a single unit incorporating an air blower in addition to the expansion means and the evaporator integrally is disposed in or under the instrument panel similarly. Generally, by using such an air conditioning system for vehicles, the whole inside of the vehicle cabin can be cooled.

In the conventional technology related to the present invention, a configuration is known that an air conditioning system is disposed under a manipulator seat in a construction vehicle such as a vehicle with a shovel (e.g. Patent Document 1). However, in a construction vehicle, the air conditioning system must be placed under the seat or at the back of the seat, etc. because the installation space of the air conditioning system such as an engine room does not exist in front of the manipulator (the driver) to begin with. Therefore, the object of Patent Document 1 is essentially different from the object of the present invention described later.

### Prior art documents

### Patent document

Patent document 1: JP-A-2006-192997

### Summary of the Invention

### Problems to be solved by the Invention

In a conventional air conditioning system for general automobiles as described above, basically, the whole inside of the vehicle cabin is cooled by the air conditioning system. However, in the case where the driver is the only occupant in the vehicle, it is often unnecessary to cool the whole inside of the vehicle cabin, and in such a case cooling the whole inside of the vehicle cabin is disadvantageous from the viewpoint of energy.

Further, because occupation volume of the whole air conditioning system for vehicles is relatively large, it may be difficult to secure the occupation volume of the whole system in the engine room. Furthermore, when part of the system such as a unit comprising the expansion means, the evaporator and the air blower is disposed under the instrument panel, there is a fear that securing the foot space of the passenger seat or walking through between the driving seat and the passenger seat may be prevented, and there is also a fear that it may become difficult to satisfy the demand to secure space in the vehicle cabin.

Accordingly, paying attention to the above-described problems in conventional air conditioning systems for general automobiles, the object of the present invention is to provide an air conditioning system for vehicles which enables an individual air-conditioning that is extremely efficient in energy terms, and which is configured so as to meet the demand to secure space in the vehicle cabin even when part of the air conditioning system is disposed in the vehicle cabin.

### Means for solving the Problems

To achieve the above-described object, an air conditioning system for vehicles according to the present invention is an air conditioning system for vehicles having a refrigeration circuit provided with a compressor, a condenser, an expansion means and an evaporator, characterized in that the compressor and the condenser are disposed in an in-vehicle area outside a vehicle cabin, and the expansion means and evaporator are locally disposed in one or more specific regions selected in the vehicle cabin.

The refrigerant compressed by the compressor and condensed by the condenser in the high-pressure part of the refrigeration circuit is decompressed and expanded by the expansion means, and is vaporized in the evaporator. The refrigerant in the evaporator exchanges heat with external air, and the cooled air is used as cooling air for air-conditioning in the vehicle. In the air conditioning system for vehicles according to the present invention, the above-described expansion means and evaporator are disposed in one or more specific regions selected in the vehicle cabin away from positions of the compressor and the condenser. Therefore, the installation space of the expansion means and evaporator taking charge of air-conditioning can be small and it is possible to achieve reductions in size and in thickness. Further, the expansion means and the evaporator can be disposed at arbitrary positions in the vehicle cabin by routing refrigerant plumbing appropriately because the compressor and the condenser in the refrigeration circuit are connected to the expansion means and the evaporator with the refrigerant plumbing. Therefore, by selecting an appropriate region in the vehicle cabin as the specific region, for example, a region which is other than the foot space of the passenger seat, etc. and is almost a dead space that is not effectively used conventionally, a refrigerated air-conditioning locally in the vicinity of the region (like a spot) through the expansion means and the evaporator which are disposed at the region can be performed. Conditioning local air as needed instead of conditioning the whole air in the vehicle cabin makes it possible to keep a load on the compressor in a requisite minimum range and to achieve energy conservation. Further, as will be described later, if a region such as a region under the seat is selected as the above-described specific region or regions, the space under the instrument panel may not be used, the foot space of the passenger seat can be secured widely, and it is possible to meet the demand to secure space in the front part of the vehicle cabin.

In the air conditioning system for vehicles according to the present invention, a structure may be employed wherein at least one expansion means and one evaporator are assembled into a single unit and the unit or units are provided by a number corresponding to a number of the above-described specific region or regions. By assembling the expansion means and the evaporator into the unit, the unit can be made thinner and smaller as a whole with ease, and the unit incorporating these instruments integrally can be easily disposed in the specified region or regions selected in the vehicle cabin as described above.

In this case, a configuration may be employed wherein an air blower is also assembled in each of the unit(s). Such a configuration makes it possible to exchange heat between the air coming from the air blower and the evaporator as needed, and makes it possible to send the air to a desired destination as air for air-conditioning.

Further, a configuration may also be employed wherein a heater is also assembled in each of the unit(s). Such a configuration enables heating performed by the heater as needed. And this configuration also makes it possible to exchange heat between the air coming from the air blower and the evaporator and makes it possible to send the air to a desired destination as air for air-conditioning.

Further, in the air conditioning system for vehicles according to the invention, basically, it is preferred that two or more specific regions selected in the vehicle cabin are configured so that air-conditioning can be performed locally in a specified region out of those specific regions that is needed at that moment. Such a configuration can be realized by a branch configuration of the refrigeration circuit (a branch configuration of refrigerant plumbing). Namely, it is a configuration wherein one compressor and one condenser in the refrigeration circuit are connected to pairs of the expansion means and the evaporator with a branch or branches of the refrigeration circuit.

Further, the above-described specific region or regions may include at least a region around a seat for the driver (a region around a seat including a lower portion of the seat), a region in a seat (an inner region of the seat itself) or both of those regions. Such a configuration makes it possible to perform spot air-conditioning which is performed only in a region of the seat for the driver, and makes it possible to perform the most efficient air-conditioning in energy consumption when the driver is the only occupant in the vehicle. In addition, other region can also be selected and configured as the above-described specific region or regions. For example, a region of a roof panel or its vicinity can be selected as the specific region or regions.

Furthermore, a configuration may be employed wherein the specific region or regions comprise a region around any of occupant's seat including a driver's seat, an inner region of a seat or both of those regions, and the specific region or regions are provided with an air outlet for blowing air-conditioning wind from the back of the seat toward the rear. Such a configuration makes it possible that the unit incorporating at least the expansion means and the evaporator integrally is provided with the driving seat and passenger seat so that each specific region can be air-conditioned, and makes it possible that the rear seat region is air-conditioned as needed by the air-conditioning wind blown from the air outlet provided on the back of the driving seat and passenger seat toward the rear. Therefore, while the number of the units incorporating the expansion means and evaporator integrally is kept in a requisite minimum, the on-demand air-canditionings can be carried out from the local air-conditioning to the air-conditioning of the whole vehicle cabin.

If the region around the occupant's seat, etc. is configured to be the specific region or regions in the present invention, a configuration may be employed wherein an air outlet for blowing air-conditioning wind having a function as an air curtain from a side of the seat toward the front is provided in the specific region or regions. Such a configuration makes it possible that the air-conditioning wind blown from the air outlet flows from the side (e.g. both sides) of the seat toward the front and then flows forward of the occupant as detouring. Therefore, as for the occupant, a comfortable air-conditioned state can be obtained because an atmosphere directly around the occupant can be shielded appropriately from an outer atmosphere in terms of temperature so that the local air-conditioning (spot-like air-conditioning) can be performed most efficiently while a discomfort caused by air-conditioning wind coming into direct contact with skin is not caused.

Such an air conditioning system for vehicles according to the present invention is applicable to any kind of vehicles, and is particularly useful in cases where the vehicle comprises an automobile, basically.

As described above, the region where at least the expansion means and the evaporator are disposed is a selected specific region in the vehicle cabin. However, as for the region out of the vehicle cabin on the vehicle where the compressor and the condenser are disposed, for example, a forward region of the vehicle than the instrument panel (for example, inside the engine room) or a region in the rear of the instrument panel can be adopted. In addition to these regions, for example, a trunk room can also be adopted.

### Effect according to the Invention

Thus, in the air conditioning system for vehicles according to the present invention, local air-conditioning in the vehicle cabin can be performed and energy conservation can be achieved as keeping the load on the compressor in a requisite minimum range. Further, by choosing a region under a seat as the specified region or regions in the vehicle cabin where the expansion means and the evaporator are disposed, expansion of the foot space of the passenger seat can be achieved and it is possible to meet the demand to secure space in the front part of the vehicle cabin. Furthermore, more efficient spot-like air conditioning and more comfortable local air conditioning can be carried out if the air-conditioning wind from the specified region has an air-curtain function.

### Brief explanation of the drawings

[Fig. 1] Fig. 1 is a schematic vertical sectional view of an air conditioning system for vehicles according to an embodiment of the present invention in a vehicle-mounted state.
[Fig. 2] Fig. 1 is a schematic plan view of an air conditioning system for vehicles according to an embodiment of the present invention in a vehicle-mounted state.
[Fig. 3] Fig. 3 is a schematic diagram showing a configuration example of a unit disposed under a seat.

### Embodiments for carrying out the Invention

Hereinafter, embodiments of the present invention will be explained referring to figures.

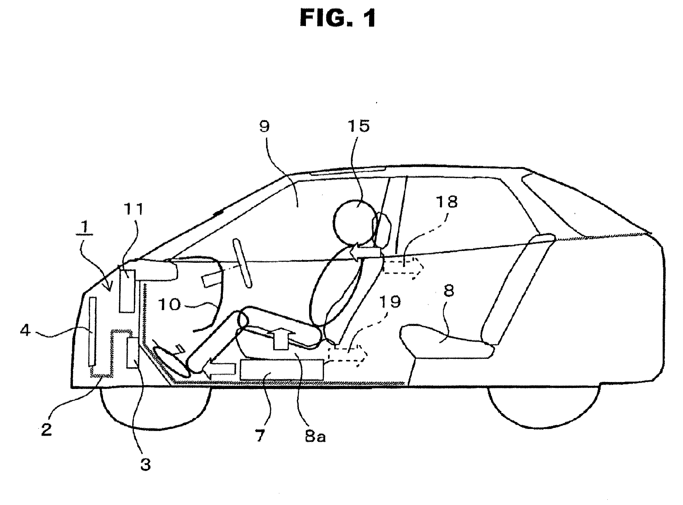

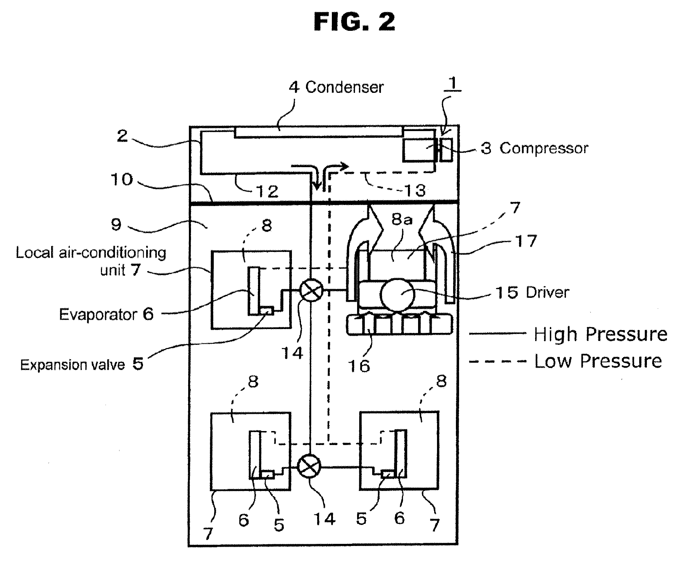

Fig. 1 and Fig. 2 depict an example of a vehicle-mounted state of an air conditioning system for vehicles according to an embodiment of the present invention. In the figures, symbol I depicts the whole air conditioning system for vehicles, and air conditioning system for vehicles 1 is provided with refrigeration circuit 2 in which refrigerant is circulated. Refrigeration circuit 2 is provided with plural local air conditioning units 7, in which one refrigerant compressor 3, condenser 4, expansion valve 5 as an expansion means connected to the compressor 3 and condenser 4 through refrigerant plumbing, and evaporator 6 are assembled into one unit. In this embodiment, each local air conditioning unit 7 is disposed locally under each seat 8 including a driver's seat 8a (a driving seat), and such region under each seat is equivalent to one or more specific regions selected in vehicle cabin 9 as referred to in the present invention. Compressor 3 and condenser 4 is placed on the forward side than instrument panel 10 as an in-vehicle area outside the vehicle cabin, and plural local air conditioning units 7 are placed on the backward side than instrument panel 10 inside the vehicle cabin. In this embodiment, as an individual air conditioning unit different from above-described local air conditioning unit 7 in the vehicle cabin, air conditioning unit for defrosters 11 is installed below the windshield. Air conditioning unit for defrosters 11 is configured so that the exterior air can also be taken therethrough as well, and each of plural local air conditioning units 7 is basically configured so as to take the interior air (the in-vehicle air) therethrough.

As for the refrigerant plumbing in refrigeration circuit 2 shown in Fig. 2, the plumbing displayed as solid lines mean high pressure refrigerant plumbing 12, and the plumbing displayed as dashed lines mean low pressure refrigerant plumbing 13. High pressure refrigerant plumbing 12 to respective local air conditioning units 7 are branched at branch portion 14, and are configured so as to pass the refrigerant only to needed unit 7 through a valve, etc. Low pressure refrigerant plumbing 13 from respective local air conditioning unit 7 are connected to compressor 3 after being joined. Therefore, it is possible to select which local air conditioning unit 7 to be operated.

Each local air conditioning unit 7 is configured so that a region in which the unit is installed can be air-conditioned individually and locally. For example, in the case where the unit is installed under a seat, particularly in the case under the driving seat as shown in the figures, air-conditioning wind 16 and 17 are blown toward the front from the back of the seat, and further, toward the front from the side of the seat to the front of driver 15 as detouring. In particular, air-conditioning wind 17 is blown as a flow in air curtain form and is configured so as to shield an atmosphere closely around driver 15 from outer atmosphere in terms of temperature appropriately, raising local air conditioning efficiency in this area. Further, causing discomfort in local air conditioning is prevented because air-conditioning wind 17 is configured not to come into direct contact with driver 15 on the front side. Furthermore, as shown in Fig. 1, when local air conditioning unit 7 is installed for driving seat 8a or passenger seat 8, it is possible to configure the unit so that it can blow air-conditioning wind partly toward the rear seat. In the example shown in the figure, air-conditioning wind 18 is "VENT" air-conditioning wind for the rear seat and air-conditioning wind 19 is "FOOT" air-conditioning wind for the rear seat. In the case where such air outlets for air-conditioning wind 18 and 19 are provided, local air conditioning unit 7 under the rear seat is omissible. In this embodiment, expansion valve 5 is placed in vehicle cabin 9. However, expansion valve 5 can also be placed in the engine room. Such a configuration makes it possible that a larger space in the vehicle cabin can be provided.

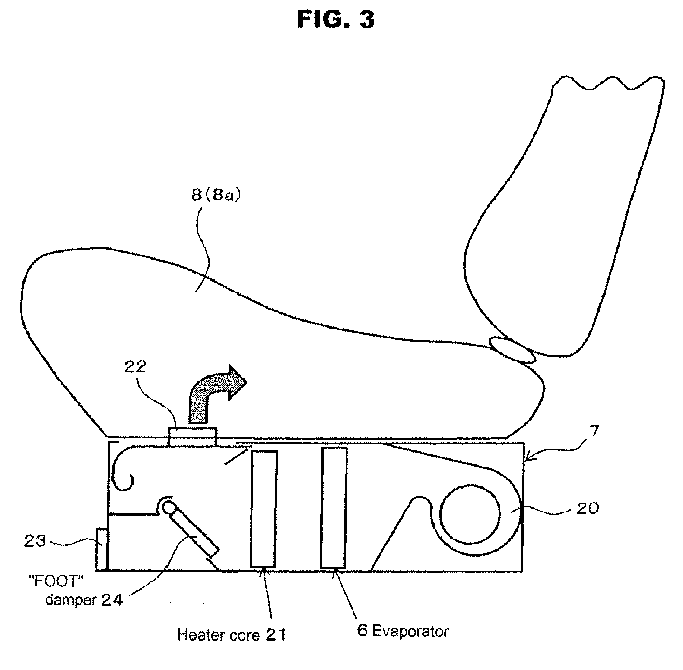

Each local air conditioning unit 7 is configured, for example, as shown in Fig. 3. Fig. 3 depicts the case where local air conditioning unit 7 is placed under driving seat 8a or passenger seat 8. In this example, evaporator 6, air blower 20 which takes air-conditioning air from the vehicle cabin and blows it out toward evaporator 6, and heater core 21 are provided in unit 7. Symbol 22 means "VENT" air outlet for air-conditioning wind on seat 8 (to an upper body of an occupant) in unit 7 and symbol 23 means "FOOT" air outlet for air-conditioning wind to the feet of the occupant, respectively. The air blown from "FOOT" air outlet 23 can be regulated by "FOOT" damper 24 provided in unit 7. The BILEVEL mode of "VENT" / "FOOT", in which air-conditioning wind is blown from both air outlets 22 and 23, is also available.

In air conditioning system for vehicles 1 according to this embodiment, local air conditioning unit 7 into which expansion valve 5 and evaporator 6 of refrigeration circuit 2 are incorporated is placed in each specific region or regions where local air conditioning is required in the vehicle cabin so as to operate air conditioning efficiently only in a region where air conditioning is required at that time with requisite minimum energy. Therefore, it is possible to provide energy conservation for the vehicle as a whole and to seek to cut down on fuel.

Further, each local air conditioning unit 7 placed in the specific region or regions can be configured to be a small thin unit so as to install unit 7 easily and appropriately by making effective use of an unused space, for example, a space under a seat. As a result, by installing the unit under the driving seat or passenger seat instead of under the instrument panel, for example, the foot space for the passenger seat can be secured widely and it is possible to meet the demand for securing space in the front part of the vehicle cabin effectively. Further, it is possible to contribute to secure space in the engine room because the total volume of instruments placed in the front part of the instrument panel can be kept small.

### Industrial Applications of the Invention

The air conditioning system for vehicles according to the present invention is particularly suitable for automobiles, and more realistically, suitable as a structure capable of local air conditioning around the driver.

### Explanation of symbols

- 1:: air conditioning system for vehicles
- 2:: refrigeration circuit
- 3:: compressor
- 4:: condenser
- 5:: expansion valve as expansion means
- 6:: evaporator
- 7:: local air conditioning unit
- 8, 8a:: seat
- 9:: vehicle cabin
- 10:: instrument panel
- 11:: air conditioning unit for defrosters
- 12:: high pressure refrigerant plumbing
- 13:: low pressure refrigerant plumbing
- 14:: branch portion
- 15:: driver
- 16, 17, 18, 19:: air-conditioning wind
- 20:: air blower
- 21:: heater core
- 22:: "VENT" air outlet
- 23:: "FOOT" air outlet
- 24:: "FOOT" damper

## Claims

1. An air conditioning system for vehicles having a refrigeration circuit provided with a compressor for a refrigerant, a condenser, an expansion means and an evaporator, **characterized in that** said compressor and said condenser are disposed in an in-vehicle area outside a vehicle cabin, and said expansion means and evaporator are locally disposed in one or more specific regions selected in said vehicle cabin.

2. The air conditioning system for vehicles according to claim 1, wherein at least one expansion means and one evaporator are incorporated into a single unit and said unit or units are provided by a number corresponding to a number of said specific region or regions.

3. The air conditioning system for vehicles according to claim 2, wherein an air blower is also incorporated in each of said unit or units.

4. The air conditioning system for vehicles according to claim 2 or 3, wherein a heater is also incorporated in each of said unit or units.

5. The air conditioning system for vehicles according to any of claims 1 to 4, wherein pairs of said expansion means and said evaporator are connected to one compressor and one condenser in said refrigeration circuit by branches of said refrigeration circuit.

6. The air conditioning system for vehicles according to any of claims 1 to 5, wherein said specific region or regions include at least a region around a driver's seat or an inner region of a seat, or both thereof.

7. The air conditioning system for vehicles according to any of claims 1 to 6, wherein said specific region or regions comprise a region around any of occupant's seat including a driver's seat or an inner region of a seat or both thereof, and is provided with an air outlet for blowing conditioned air from a back side toward the rear thereof.

8. The air conditioning system for vehicles according to claim 7, wherein an air outlet for blowing air-conditioning wind having a function as an air curtain from a side of said seat toward the front is provided in said specific region or regions.

9. The air conditioning system for vehicles according to any of claims I to 8, wherein said vehicle is an automobile.

10. The air conditioning system for vehicles according to any of claims 1 to 9, wherein said in-vehicle area outside said vehicle cabin, in which said compressor and said condenser are disposed, is a front area of the vehicle ahead of an instrument panel or a rear area of an instrument panel.
